# EUROPÄISCHE PATENTANMELDUNG

(11) **EP 4 049 950 A1**
(43) Veröffentlichungstag der Anmeldung: **31.08.2022**
(21) Anmeldenummer: 21159057.5
(22) Anmeldetag: 24.02.2021
(51) Int. Cl.: B65G 53/08, B65G 53/36, B65G 53/52, A01K 67/033

(54) **PNEUMATISCHES TRANSPORTIEREN VON INSEKTEN**

(71) Anmelder: Illucens GmbH, 48683 Ahaus (DE)
(72) Erfinder: WESSENDORF, Dirk, 48683 Ahaus (DE)
(74) Vertreter: König Szynka Tilmann von Renesse Patentanwälte Partnerschaft mbB Düsseldorf

(57) **Zusammenfassung**

Die Erfindung betrifft ein Verfahren und eine Vorrichtung zum Transprotieren einer Vielzahl von Insekten von einem Raum über einen Kanal zu einem Ort, wobei die Insekten aktiv mittels Einwirkens eines Medienstroms bewegt werden.

## Beschreibung

Die Erfindung betrifft eine Vorrichtung und ein Verfahren zum Fördern oder Transportieren einer Vielzahl von Insekten über einen Kanal, und die Verwendung eines Medienstroms zu diesem Zwecke, insbesondere für eine Anlage zur automatisierten Aufzucht und Handhabung der Insekten. Ferner betrifft die Erfindung eine Entwicklungsstation für Insekten und eine automatisierte Aufzucht- und Handhabungsanlage für Insekten mit mindestens einer Vorrichtung zum Fördern oder Transportieren einer Vielzahl von Insekten über einen Kanal. Zudem betrifft die Erfindung eine Verwendung eines Trägerhilfsstoffs zum schonenden Transport von Insekten oder Kleinsttieren in einem Medienstrom.

Im Bereich der Insektenaufzucht ist es in der Regel notwendig, Insekten von einem zu einem anderen Ort zu bewegen, um jeweils unterschiedliche Umgebungen bzw. für das jeweilige Entwicklungsstadium des Insekts gewählte Lebensbedingungen zur Verfügung zu stellen. Der im Stand der Technik bekannte Transport von Insekten ist aufwendig. Bisher werden bei der Insektenaufzucht insbesondere die Insektenlarven meist sogar von dem Anwender in einem Behältnis von einem Ort zum anderen Ort getragen oder Behältnisse mit den Insekten mit Hilfe mechanischer Transporteinrichtung verfahren. Bekannte aufwändigere Transporteinrichtungen für Stückgüter oder Futtermittel werden nicht für den Transport lebender Tiere eingesetzt und versprechen vor allem keinen ausreichend schonenden Transport der Insekten. So entstehen bei den für den luftstrombewirkten Futtermitteltransport erforderlichen Luftgeschwindigkeiten üblicherweise erhebliche Scherkräfte.

Aufgabe der Erfindung ist es, ein Verfahren, eine Vorrichtung und eine Verwendung zu schaffen, mit denen die aus dem Stand der Technik beim Transport von Insekten verbundenen Nachteile zumindest teilweise überwunden werden können.

Die Aufgabe wird mit dem Gegenstand der unabhängigen Ansprüche gelöst. Vorteilhafte Ausgestaltungen ergeben sich aus den jeweiligen abhängigen Ansprüchen und der Beschreibung.

Nach einem Kerngedanken der Erfindung werden die Tiere von einem Raum zu einem Ort außerhalb des Raumes mittels eines Medienstromes über einen Kanal bewegt. Mit dem Medienstrom lässt sich, um dies zu bewirken, eine Kraft auf die Insekten ausüben. Die Erfindung erlaubt überraschenderweise einen für Tiere ausreichend schonenden Transport, der die Tiere wenig belastet und gleichwohl automatisierbar ist. Der Transport ist vorteilhaft mit oder ohne Futtermittel und insbesondere auch zusammen mit den Ausscheidungen der Tiere möglich.

Mittels Medienstrom, der insbesondere als Luftstrom ausgestaltet sein kann, können auch nicht flugfähige Insekten einfach und schonend und belastungsarm transportiert werden. Auch können die Insekten dabei ohne in einem Transportbehältnis angeordnet werden zu müssen, bewegt werden. Der Begriff Medienstrom beinhaltet auch eine Kombination mehrerer Bestandteile, so dass neben dem Luftstrom noch weitere gasförmige, flüssige, feste und/oder fluide Bestandteile vorhanden sein können.

Der Begriff "Transportieren" im Sinne der Beschreibung umfasst jede Art von Bewegen von einem Ort zu einem anderen Ort.

Bei "Insekten" kann es sich im Sinne der Beschreibung um jedwedes Insekt oder deren befruchtete oder unbefruchtete Eier handeln oder um Insekten in jedem Lebensstadium, insbesondere in dem sie nicht eigenständig flugfähig sind. Bei dem Insekt kann es sich um lebende Insekten der Gattung "hermetia illucens" mit potentiell schneller und hoher Gewichtszunahme handeln. Wie weiter unten beschrieben, ist die Erfindung in allen Ausgestaltungen jedoch nicht auf Insekten beschränkt, sondern für jede Art der Förderung von Lebewesen geeignet.

Bei einem "Raum" kann es sich im Sinne der Beschreibung um jedwedes ein- oder mehrseitig umgrenzte Volumen handeln, das die Insekten beinhalten kann. Der Raum ist geeignet mit dem Kanal, vorzugsweise lösbar, verbunden zu werden. Zum Zwecke des Transports der Insekten ist der Kanal während der Durchführung des Transports mit dem Raum verbunden. Der Raum kann mit einer Schleuse und/oder einem Trichter versehen sein, um die mehreren Insekten in den Raum einzufüllen bzw. einzubringen.

Der Begriff "Kanal" umfasst im Sinne der Beschreibung einen Langkörper mit einem Volumen, der dazu ausgestaltet ist, den Medienstrom zu führen bzw. dem Medienstrom eine gerichtete Bewegung aufzuprägen. Bei dem Kanal kann es sich insbesondere um ein Rohr oder einen Rohrabschnitt mit beliebigem Querschnitt handeln, welches insbesondere flexibel ausgestaltet sein kann. Es ist möglich, dass der Kanal abschnittsweise eine unterschiedliche Ausgestaltung aufweist. Der Kanal kann auch zumindest teilweise oder vollständig als Schacht oder Schachtsystem ausgestaltet sein. Der Kanal kann Teil eines (Kanal-)Systems sein, bei dem beispielsweise mehrere Abschnitte vorliegen können, die mittels fester oder flexibler Verbindungselemente miteinander verbunden sind.

Bei dem "Ort" kann es sich im Sinne der Beschreibung um das Transportziel für die Insekten handeln, das ausgewählt werden kann, um an das Lebensstadium bzw. Entwicklungsstadium des Insekts angepasste Lebensbedingungen oder für die Verarbeitung vorgesehen Handhabungsbedingungen bieten zu können. Der Ort kann insbesondere eine zeitweise Aufnahmestation für die Insekten darstellen.

Unter dem Begriff "Medienstrom" kann ein Strom beinhaltend einen, gasförmigen, flüssigen oder fein verteilten festen Stoff verstanden werden. Insbesondere kann es sich bei dem Medium um ein Gas, insbesondere Luft, eine Flüssigkeit oder ein Fluid, welches sowohl gasförmige als auch flüssige oder feste Komponenten aufweist, handeln. Kombinationen der genannten Aggregatzustände von Stoffen sind frei wählbar möglich.

Dem Medienstrom kann ein Trägerhilfsstoff beigefügt werden, um die Tiere beim Transport vor Verletzungen zu schützen. Der Trägerhilfsstoff kann Bestandteil des Raumes sein, der frei beweglich zum Raum in diesem zunächst vorliegen kann, oder der Trägerhilfsstoff kann dem Medienstrom gesondert zugegeben werden.

Unter dem Begriff "Trägerhilfsstoff" können synthetische oder natürliche, vorzugsweise elastische Materialien verstanden werden, die dem Medienstrom beigegeben werden können, die geeignet sind den Transport zu verbessern und z.B. die zu fördernden Lebewesen und/oder Objekte, wie Insekten, beim Transport gegen Verletzung oder Beschädigung zu schützen. Vorzugsweise weisen diese Stoffe eine besondere Weichheit und ein geringes Volumengewicht auf. Der Trägerhilfsstoff kann ein loses Gefüge weicher Fasern, wie Watte oder ein Massenstoff wie Weizenkleie sein. Der Trägerhilfsstoff kann die Objekte, insbesondere die Insekten, zumindest teilweise umgeben und/oder die Objekte, insbesondere die Insekten, können an dem Trägerhilfsstoff anliegen oder in dem Trägerhilfsstoff eingebettet sein oder mit dem Trägerhilfsstoff verblasen werden. Der Trägerhilfsstoff kann eine geringe Dichte verbunden mit einer hohen Zähigkeit aufweisen, so dass bei einer möglichen Verformung im Medienstrom, beispielsweise verursacht durch Biegungen oder Kurven im Kanal, primär der Trägerhilfsstoff verformt werden kann, ohne dass die von dem Trägerhilfsstoff umgebenen Tiere Schaden nehmen können. Dem Trägerhilfsstoff kann eine Funktion beinhaltend eine Stoßadsorption zukommen, indem der Trägerhilfsstoff Stöße und/oder Kräfte aufnimmt und diese von den Tieren fernhält bzw. diese abpuffert. Im Trägerhilfsstoff können Kammern, beispielsweise Luftkammern, vorhanden sein, die bei Einwirken einer Scher-, Druck- und/oder anderen Kraft verformt und/oder komprimiert werden können, um die Kräfte zu adsorbieren und/oder von den Tieren abzulenken. Die Kammern können zumindest in einem gewissen Maß rückstellend ausgestaltet sein, wenn die Kraft nicht mehr oder in einer anderen Richtung auf den Trägerhilfsstoff einwirkt.

Es kann vorgesehen sein, dass der Trägerhilfsstoff stückig vorliegt, wobei der Trägerhilfsstoff insbesondere fest sein kann, und aufgrund seiner Abmessung der einzelnen stückigen festen Bestandteile Räume ausbildet, in denen die zu transportierenden Lebewesen und/oder Objekte angeordnet sind bzw. angeordnet werden. Eine nicht komprimierbare stückige Ausbildung kann eine Anpassung der Gesamtform des Trägerhilfsstoff in Biegungen und/oder Abknickungen des Kanals erlauben, kann aber auch ermöglichen, dass Räume zwischen den stückigen festen Bestandteilen im Wesentlichen erhalten bleiben können.

In einer bevorzugten Ausführungsform kann an oder in dem Trägerhilfsstoff ein Futtermittel oder Nahrungsmittel angeordnet sein. Es kann auch vorgesehen sein, dass der Trägerhilfsstoff im Wesentlichen als Futtermittel ausgestaltet ist. Das Futtermittel kann als Lockmittel für die Tiere vorgesehen sein, damit eine Vielzahl der Tiere die Position(en) des Futtermittels einnimmt. Beispielsweise kann das Futtermittel von dem Trägerhilfsstoff umgeben sein; es kann auch vorgesehen sein, dass mehrere separate Volumina des Futtermittels jeweils von dem Trägerhilfsstoff umgeben sind, wobei der Trägerhilfsstoff als eine Einheit von einem Benutzer gehandhabt werden kann. Der Trägerhilfsstoff kann zusammenhängend ausgebildet sein, was die Handhabung vereinfachen kann. Im Falle eines losen Gefüges von Fäden oder Fasern, kann der Trägerhilfsstoff einfach "portioniert" werden, was eine simple Handhabung ermöglicht.

Die Menge bzw. das Volumen des Trägerhilfsstoffs kann an die Menge bzw. Anzahl der zu transportierenden Tiere angepasst sein, so dass ein Ressourcen schonender Transport möglich sein kann. Eine mehrfache Verwendung eines - gegebenenfalls gereinigten - Trägerhilfsstoffs kann zu einem verbesserten Transport unter besonderer Berücksichtigung der Nachhaltigkeit führen. Es kann auch vorgesehen sein, dass der Trägerhilfsstoff nach einer Verwendung aufbereitet werden kann, indem beispielsweise das Gefüge des Trägerhilfsstoffs wieder gelockert und/oder Kammern des Trägerhilfsstoffs, die der Stoßadsorption dienen, wieder hergestellt oder aktiviert werden.

Soweit beschrieben ist, dass die Insekten aktiv mittels Einwirken eines Medienstroms vom Raum zum Ort bewegt werden, so ist hierunter zu verstehen, dass für den Transport der Insekten der Medienstrom im Wesentlichen ursächlich ist. Dabei ist nicht ausgeschlossen, dass es beispielsweise eine zusätzliche Komponente, insbesondere entlang eines Streckenabschnitts im Kanal, gibt, die beispielsweise aufgrund der Gravitation bzw. des Einwirkens der Erdbeschleunigung oder anderer aktiver Maßnahmen oder der Eigentätigkeit des Insekts hervorgerufen wird. Für eine "aktive Bewegung" ist es ausreichend, dass die Insekten über mindestens einen Abschnitt zwischen dem Raum und dem Ort im Wesentlichen durch Einwirken des Medienstrom bewegt wird.

In einer bevorzugten Ausführungsform werden Insekten zu mehreren Räumen oder Orten bewegt. Der Raum kann wahlweise mit dem Ort oder anderen Raum mittels eines Kanals verbunden und der Medienstrom erzeugt werden, um die Insekten zumindest teilweise aktiv dorthin zu bewegen. Hierdurch wird die Möglichkeit geschaffen, die Insekten wahlweise und gezielt verschiedenen Orten oder Räumen zuzuführen, wobei der Ort oder Raum verändert oder ortsfest verbleiben kann. Es ist somit ein Bewegen der Insekten zu verschiedenen Orten der Handhabung möglich. Mittels einer entsprechenden Ausbildung des Kanals bzw. des Kanalsystems, welches insbesondere Weichen, beispielsweise in Form von Klappen oder ähnlichem, aufweisen kann, kann die wahlweise Zuführung erfolgen. Es kann auch vorgesehen sein, dass der Kanal zumindest abschnittsweise in zumindest einer Raumrichtung, insbesondere in zwei Raumrichtungen, ganz besonders bevorzugt in drei Raumrichtungen, verfahren werden kann, um entweder die Insekten vom Raum zu verschiedenen Orten oder Räumen zu bewegen.

In einer bevorzugten Ausführungsform kann dem Medienstrom zuvor oder mit den Insekten beim Transport Futtermittel beigefügt werden, dessen Menge vorzugsweise in Abhängigkeit von der Menge der bewegten Insekten bemessen wird. Beispielsweise können Insektenlarven zunächst dosiert in den Raum eingebracht werden, wobei in den Raum zu dem Futtermittel, insbesondere in Form von Weizenkleie, zugeführt wird und die Insekten mit dem Futtermittel zu dem Raum oder dem weiteren Ort oder Raum bewegt werden.

Die Erfindung schafft auch eine Vorrichtung zum Transportieren von Insekten, insbesondere Insektenlarven, von einem Raum zu einem Ort, wobei ein Kanal, der den Raum mit dem Ort verbindet und eine Einrichtung zum Erzeugen eines Medienstroms vorgesehen sind. Mit dem Medienstrom können die Insekten zumindest teilweise aktiv von dem Raum zum Ort bewegt werden.

Der Kanal kann ausgestaltet sein, den Raum wahlweise mit unterschiedlichen Orten oder Räumen zu verbinden. In einer bevorzugten Ausführungsform können Insekten von einem Raum ergänzend oder alternativ in einem Kanalsystem zu gewählten Orten oder Räumen gefördert werden.

Dabei können eine oder mehrere Einbringungsöffnungen in das Kanalsystem oder in einen Raum vorgesehen sein, durch die die Insekten und oder Futtermittel zugeführt werden können. Insbesondere kann dabei ein am Kanal oder Raum angeordneter Trichter zum Einsatz kommen. Durch den Trichter können die Insekten oder das Futtermittel oder ein Gemisch aus beidem einer Schleuse und damit dem Medienstrom zugeführt werden.

In einer bevorzugten Ausführungsform weist die Vorrichtung eine Schleuse auf, welche ein sich bewegendes, insbesondere um eine Achse drehendes Schleusenrad aufweisen kann, Das Schleusenrad kann mindestens eine, vorzugsweise drei oder mehr, insbesondere winkeläquidistant um die Drehachse angeordnete, Lamellen aufweisen, die eine Zuführung von zu transportierenden bzw. zu bewegenden Lebewesen und/oder Trägerhilfsstoff oder Futtermittel erlauben, wobei der Kanal im Wesentlichen in Austragsrichtung an der Einbringungsöffnung geschlossen ist. Die Lamellen des Schleusenrads können ein weiches Material, insbesondere einen weichen Kunststoff, beispielsweise ein Gummi mit einer geringen Shore-Dichte, aufweisen oder im Wesentlichen aus einem bzw. dem weichen Material bestehen. Das weiche Material kann insbesondere ein Kunststoff sein. Die Lamellen können sich bezogen auf die Erstreckung von der Drehachse weg, gekrümmt oder gebogen erstrecken, wobei eine rückwärtige Biegung bezogen auf die Drehrichtung bevorzugt ist. Es kann eine nach hinten (rückwärtig) gebogene Krümmung oder Biegung der Lamellen bezogen auf die Drehrichtung ausgebildet sein. Scherkräfte können reduziert werden. Ein Abscheren kann zu einem nur leichten Quetschen abgemildert werden. Es kann in einer besonders bevorzugten Ausführungsform vorgesehenen sein, dass ein sich um eine Drehachse drehendes Schleusenrad an einer Einbringungsöffnung angeordnet ist. Am Schleusenrad können sich von der Drehachse erstreckende Lamellen angeordnet sein. Zwischen zwei benachbarten Lamellen kann ein Abschnitt gebildet sein, in den Lebewesen und/oder Objekte gegebenenfalls mit Trägerhilfsstoff und/oder Futtermittel, insbesondere unter dem Einfluss von Schwerkraft, gelangen und durch die Drehung des Schleusenrads in Drehrichtung bewegt werden kann. Gelangt der Abschnitt zwischen den beiden benachbarten Lamellen in Verbindung mit dem Kanal, können die Lebewesen und/oder Objekte gegebenenfalls mit Trägerhilfsstoff und/oder Futtermittel, insbesondere unter Einwirkung der Schwerkraft, in den Kanal abgeführt werden. Die Lebewesen und/oder Objekte gegebenenfalls mit Trägerhilfsstoff und/oder Futtermittel können dann unter Einwirkung des Medienstroms in dem Kanal bewegt oder transportiert werden.

In einer bevorzugten Ausführungsform kann eine zusätzliche und/oder alternative Einbringung eines Medienstroms im Bereich eines Bogens, einer Kurve und/oder einer Biegung erfolgen, indem beispielsweise ein Luftstrom im Bereich des Bogens, der Kurve und/oder der Biegung zugeführt wird. Es kann ein zusätzlicher Medienstrom in den Kanal eingebracht werden, der im Bereich des Bogens, der Kurve und/oder der Biegung durch einen zumindest teilweise für den Medienstrom durchlässigen Abschnitt des Kanals geführt werden kann. Beispielsweise kann der für den Medienstrom durchlässige Abschnitt des Kanals eine oder mehrere Durchgänge aufweisen, durch die der Medienstrom eingebracht werden kann; durch eine Beaufschlagung der Durchgänge mit dem Medienstrom kann erreicht werden, dass an den Durchgängen kein zu transportierendes Lebewesen und/oder Objekt gegebenenfalls mit Trägerhilfsstoff oder Futtermittel aus dem Kanal austritt. Es kann eine gezielte Einbringung eines Medienstroms, bspw. ein Gas, insbesondere Luft, erreicht werden, um Reibung und/oder Scherkraft zu reduzieren. Es kann vorgesehen sein, dass in dem Bogen, der Kurve und/oder der Biegung ein poröses Material an der Wandung, an der der zusätzliche Medienstrom eingebracht werden soll, mit einem porösen Material ausgekleidet ist; die Wandung kann eine Zuführung von dem zusätzlichen Medienstrom aufweisen und durch das poröse Material in den Kanal diffundieren.

In einer bevorzugten Ausführungsform kann der Kanal von dem Raum zum Ort klappenlos ausgestaltet sein, so dass ein im Wesentlichen freier Durchgang zwischen dem Raum und dem Ort vorliegt und insbesondere kein Verschluss - auch nicht zeitweilig - zwischen Raum und Ort vorliegt. Ein eventuell am Ende des Kanals in unmittelbarer Nähe des Orts ausgebildetes temporär verschließbares Ventil kann hiervon ausgenommen sein.

In einer bevorzugten Ausführungsform ist die Einrichtung zum Erzeugen eines Medienstroms ausgestaltet, einen Medienstrom mit einer Geschwindigkeit in einem Bereich von 0,1 m/s bis 80 m/s vorzugsweise 4 m/s bis 12 m/s zu erzeugen. Es hat sich gezeigt, dass die Insekten bei den genannten Geschwindigkeiten des Medienstroms die Bewegung unbeschadet überstehen.

In einer besonders bevorzugten Ausführungsform ist die Einrichtung zum Erzeugen eines Medienstroms als Seitenkanalverdichter oder als Kolbenverdichter etc. ausgestaltet. Mittels einer Verdichterstation kann eine mehrfache Verdichtung des Medienstroms erreicht werden, wodurch insbesondere wesentlich höhere Differenzialdrücke erzeugt werden können. Der schonende Transport ist erfindungsgemäß gewährleistet und kann durch die beschriebene Verwendung eines Trägerhilfsstoffes, der beschriebenen Einbringung in den Kanal mittels einer Einbringungsöffnung und gegebenenfalls einer Schleuse sowie der Einbringung von zusätzlichem Medienstrom im Bereich eines Bogens, einer Kurve und/oder Biegung weiter erhöht werden.

In einer besonders bevorzugten Ausführungsform ist im Endbereich des Kanals am Auslass, d.h. insbesondere am Ort, eine Düse vorgesehen, die eine teilweise Umlenkung des Medienstroms über den Querschnitt am Auslass vorsieht. Eine Wandung des Kanals kann im Endbereich in den Kanal eingebogen sein, so dass die Wandung quer zur Längsrichtung des Kanals im Endbereich eingebogen ist; insbesondere kann eine Umlenkung des Medienstroms in einem Teilbereich des Querschnitts um mehr als 45°, insbesondere mehr als 55°, insbesondere mehr als 65°, insbesondere mehr als 75°, insbesondere mehr als 85°, zur zuvor gewählten Richtung im Kanal, vorgesehen sein. Es kann eine Düse am Auslass gebildet werden. In einem Umfangsbereich kann die Düse eine "Weiterführung" des Kanals sein und in einem Umfangsbereich eine Abrundung quer zur Längserstreckung des Kanals im Sinne einer Querschnittsverringerung, die einen Bereich einer Biegung oder Kurve umfassen kann, aufweisen; der Winkelbereich der "Weiterführung" kann im Bereich von 90° bis 200° des Umfangs betragen, der Winkelbereich der Abrundung kann im Bereich von 90° bis 200° des Umfangs betragen. Durch die teilweise Umlenkung kann eine Verringerung der Gesamtgeschwindigkeit in einer Richtung des Kanals erreicht werden, indem der Kanal am Auslass hinsichtlich der Auslassrichtung eine teilweise andere Orientierung bzw. Richtung aufweist als der Kanal bis zum Auslass. Der Austrag der Objekte oder Lebewesen am Bereich des Auslasses kann beispielsweise um 20° bis 90°, insbesondere 30° bis 80°, insbesondere 40° bis 70°, insbesondere 40° bis 60°, umgelenkt werden.

Die gegebenenfalls vorhandenen Bestandteile des Kanalsystems, wie Düsen, Übergänge, Richtungsänderungen, Weichen und Endstücke können in einer besonders tierschonenden Weise ausgestaltet sein. So kann ein besonders geformtes, beispielsweise gerundetes, Endstück ein zielgerichtetes Einbringen der Tiere in einen definierten Bereich innerhalb eines bestimmten Ortes erlauben, ohne die Tiere besonders zu belasten.

Des Weiteren kann eine Temperierung der Ansaugluft z.B. auf 20-50 °C, vorzugsweise auf 40 °C vorteilhaft sein, insbesondere um dem Kühlungseffekt der Druckverminderung im Kanalsystem entgegenzuwirken. Es kann zusätzlich oder alternativ vorgesehen sein, dass der Kanal zumindest abschnittsweise erwärmt wird, so dass im Inneren des Kanals eine Temperatur von 20 °C bis 50 °C, insbesondere 30°C bis 45°C, vorzugsweise 40 °C, vorliegt.

Es wird auch eine Entwicklungsstation für Insekten geschaffen, welche eine Vorrichtung, die im Rahmen der Beschreibung beschrieben ist, umfasst.

Eine Entwicklungsstation für Insekten kann einen Bereich oder ein komplettes System für eine Insektenaufzucht beinhalten, bei dem Insekten zielgerichtet vermehrt bzw. hergestellt und gezüchtet werden. Beispielsweise können Insekten zum Zwecke der Bereitstellung als Futtertier oder verarbeitet als Futtermittel, insbesondere für Haus- oder Nutztiere, gezüchtet werden. Im Rahmen der Insektenaufzucht werden lebende Tiere fortlaufend zwischen unterschiedlichen und für den jeweiligen Lebensabschnitt oder die Verarbeitung ausgestalteten Bereichen bewegt bzw. transportiert.

Der Transport stellt sowohl für die Tiere als auch für die mit dem Transport befassten Personen eine Belastung dar. Neben unterschiedlichen Rahmenbedingungen am Ursprungsort und Zielort sollte der Transport bzw. die Bewegung von dem Ursprungsort so schnell und schonend durchgeführt werden wie möglich durchgeführt werden. Dies ermöglicht die vorliegende Erfindung nachweislich, weil sich bei der erfindungsgemäßen Art des Transports die Wachstumszeit der Insekten bis zum Erreichen eines angestrebten Endgewichts verringern und die Mortalitätsrate nachweisbar senken lässt.

Die Erfindung schafft auch eine automatisierte Aufzucht- und Handhabungsanlage für Insekten mit mindestens einer beschriebenen Vorrichtung, wobei die Insekten in unterschiedlichen Stationen vorgesehen sind und die Stationen hinsichtlich Handhabung und Transport automatisiert betrieben werden.

Die Erfindung schlägt auch die Verwendung einer Vorrichtung zu Erzeugung eines Medienstroms für den Transport einer Vielzahl von Insekten, insbesondere von Insektenlarven, von einem Raum zu einem Ort über einen Kanal vor.

Die Erfindung schlägt auch eine Verwendung eines Trägerhilfsstoffs zum schonenden Transport von Insekten oder Kleinsttieren in einem Medienstrom vor, wobei insbesondere eine beschriebene Vorrichtung oder Einrichtung verwendet werden kann.

In einem selbstständig eine Erfindung begründenden Aspekte wird auch ein Verfahren und eine Vorrichtung zum Transportieren mindestens eines Lebewesens mit den vorbeschriebenen Merkmalen oder einer beliebigen Kombination daraus offenbart.

Bei dem Lebewesen kann es sich auch um ein Säugetier, ein Kleintier oder ein Kleinsttier handeln.

In einem selbstständig eine Erfindung begründen Aspekt wird ferner ein Verwenden eine Vorrichtung zum Erzeugen eines Medienstroms bei der Bewegung mindestens eines Lebewesens geschrieben.

Zahlenangaben im Sinne der Beschreibung sind Angaben, die mit einer Toleranz von +/- 10 %, insbesondere +/- 5 %, behaftet sein können, sodass die Zahlenangabe nicht nur den einen Wert, sondern einen Wertebereich beschreibt, um insbesondere Toleranzbereiche, die herstellungsbedingt sein können, Rechnung zu tragen.

Soweit die Erfindung in Bezug auf Aspekte beschrieben ist, die die Vorrichtung, das Verfahren und ein Verwenden betreffen, so ergänzen die einzelnen Aspekte mit ihren genannten Merkmalen einander hinsichtlich der Ausgestaltung der Merkmale für jeden der anderen Aspekte, sodass insbesondere Merkmale eines Verfahrens oder einer Vorrichtung auch für die Beschreibung des jeweils anderen Aspekts mittels Vorrichtungsmerkmalen bzw. Verfahrensmerkmalen gelten. Sind Merkmale hinsichtlich eines Aspekts beschrieben, so ist diese Beschreibung als auch als Beschreibung für ein Merkmal des anderen Aspekts zu verstehen.

Die vorstehenden Ausführungen stellen ebenso wie die nachfolgende Beschreibung beispielhafter Ausführungsformen keinen Verzicht auf bestimmte Ausführungsformen oder Merkmale da.

Die Erfindung wird nachfolgend anhand in den Zeichnungen dargestellten Ausführungsbeispiel näher erläutert.

### Darin zeigen:

- Fig. 1: eine schematische Darstellung einer Vorrichtung zum Transportieren einer Vielzahl von Insekten, insbesondere von Insektenlarven;
- Fig. 2: eine vergrößerte schematische Darstellung eines Abschnitts eines Kanals im Bereich einer Biegung, im Querschnitt, der in Fig. 1 mit A-A bezeichnet ist; und
- Fig. 3: eine vergrößerte schematische Darstellung einer Düse im Endbereich des Kanals der Fig .1 im mit X bezeichneten Bereich.

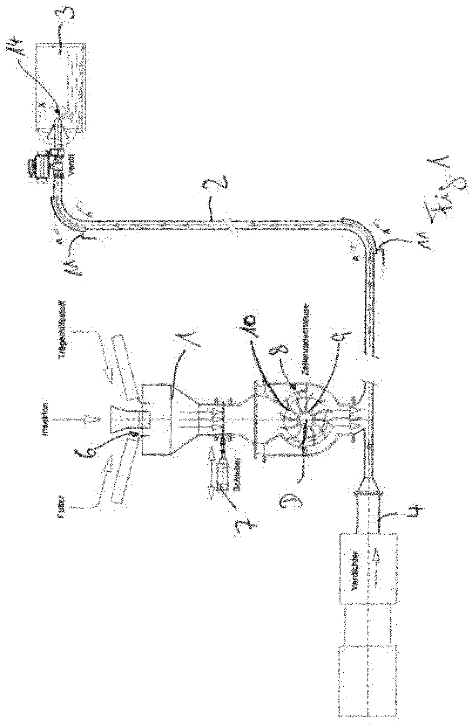

Figur 1 zeigt in einer schematischen, teilweise geschnittenen Darstellung eine Vorrichtung zum Transportieren von Objekten und/oder Lebewesen. In der gezeigten Ausführungsform werden Insekten, insbesondere Insektenlarven, mit der Vorrichtung zum Transportieren transportiert. Die Vorrichtung weist einen Raum 1 auf, in den Insekten eingefüllt werden können bzw. sind die Insekten in dem Raum 1 vorhanden. Ferner weist die Vorrichtung einen Kanal 2 auf. Der Kanal 2 verbindet den Raum 1 mit einem Ort 3, zu dem die Insekten transportiert werden. Ferner ist eine Einrichtung zu 4 zum Erzeugen eines Medienstroms vorhanden. Mittels des Medienstroms können die Insekten bzw. Insektenlarven zumindest teilweise aktiv von dem Raum 1 zu dem Ort 2 transportiert werden.

Der Raum 1 weist eine Einbringungsöffnung 6 auf, durch den die Insekten zugeführt werden können. Der Raum 1 ist mittels eines Schiebers 7 von einer als Zellenradschleuse ausgestalteten Schleuse 8 abtrennbar. Mittels der Schleuse 8 können die Insekten bzw. Insektenlarven dem Kanal 2 zugeführt werden.

Die Schleuse 8 ist als Zellenradschleuse ausgeführt und weist ein Schleusenrad 9 auf, welches sich um eine Drehachse, die senkrecht zur Papierachse verläuft und den Mittelpunkt D des Schleusenrads 9 schneidet, drehen. Das Schleusenrad weist in der Ebene quer zur Drehachse gekrümmte Lamellen 10 auf.

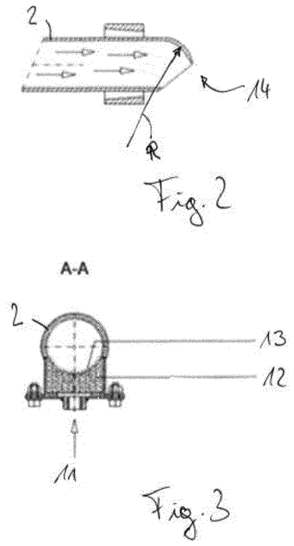

In der in Figur 1 dargestellten Ausführungsform ist an einer Biegung, einer Kurve oder Bogen K des Kanals 2 (Fig. 3) eine zusätzliche bzw. alternative Einbringung eines Medienstroms vorgesehen. Hierzu weist die Wandung des Kanals 2 in diesem Bereich eine Zuführung 11 für die Zuführung des zusätzlichen Medienstroms auf, die an der Außenseite der Kurve, des Bogens bzw. der Biegung angeordnet ist. Im Inneren des Kanals 2 ist in der Kurve K die innere Wandung des Kanals 2, die zur Kurvenaußenseite benachbart ist, mit porösem Material 12 verkleidet. Durch das poröse Material 12 kann der zusätzliche Medienstrom, der durch die Zuführung 11 in den Kanal 2 eingebracht wird, in den freien Abschnitt des Kanals 2 diffundieren. Zwischen dem porösen Material 12 und dem freien Abschnitt des Kanals 2 kann sich ein Medienstrompolster 13 bilden.

Figur 2 zeigt in einer Schnittdarstellung den Bereich X der Figur 1. Im Bereich des Orts 3 ist eine Auslassöffnung 14 vorgesehen, bei der die Wandung des Kanals 2 über einen Winkelbereich des Umfangs im Endbereich eingebogen ist. Die Figur 2 zeigt hierzu einen gekrümmten "oberen" Bereich, bei dem ein Radius schematisch quer zur Längserstreckung des Kanals 2 angegeben ist. Der "untere" Bereich an der Auslassöffnung 14 verläuft quer zur Längserstreckung des Kanals 2 gerade.

## Patentansprüche

1. Verfahren zum Transprotieren einer Vielzahl von Insekten von einem Raum (1) über einen Kanal (2) zu einem Ort (3), wobei die Insekten aktiv mittels Einwirkens eines Medienstroms bewegt werden.

2. Verfahren nach Anspruch 1, wobei die Insekten zumindest teilweise aktiv über den Medienstrom von dem Raum (1) zu weiteren Räumen (2) und/oder Orten bewegt werden.

3. Verfahren nach Anspruch 1 oder 2, wobei dem Medienstrom beim Transport Futtermittel und/oder ein Transporthilfsstoff beigefügt wird, dessen Menge insbesondere in Abhängigkeit von der Menge der bewegten Insekten bemessen wird.

4. Vorrichtung zum Transportieren einer Vielzahl von Insekten, insbesondere von Insektenlarven, **gekennzeichnet durch** einen Raum (1) mit Insekten und einen Kanal (2), der den Raum (1) mit einem Ort (3) verbindet, einer Einrichtung (4) zum Erzeugen eines Medienstroms, der geeignet ist, die Insekten mittels des Medienstroms zumindest teilweise aktiv von dem Raum (1) zu dem Ort (3) zu transportieren.

5. Vorrichtung nach Anspruch 4 mit mehreren Räumen (1) und/oder Orten, wobei für mindestens einen Raum (1) mindestens eine Einbringungsöffnung (6, 7) vorgesehen ist, durch die die Insekten zugeführt werden können und der Kanal (2) ausgestaltet ist, den Raum (1) wahlweise mit einem der weiteren Räume (1) oder Orten zu verbinden.

6. Vorrichtung nach Anspruch 4 oder 5, die eine Einrichtung aufweist, den Kanal (2) zumindest teilweise in Richtung mindestens eines Raumes (1) oder Ortes zu bewegen.

7. Vorrichtung nach einem der Ansprüche 4 bis 6, wobei die Einrichtung (4) zum Erzeugen eines Medienstroms ausgestaltet ist, einen Medienstrom mit einer Geschwindigkeit in einem Bereich von 0,1 m/s bis 80 m/s zu erzeugen.

8. Vorrichtung nach einem der Ansprüche 4 bis 7, wobei die Einrichtung (4) zum Erzeugen eines Medienstroms als Verdichterstation, insbesondere als Seitenkanalverdichter, Kolbenverdichter oder ähnliches, ausgestaltet ist.

9. Vorrichtung nach einem der Ansprüche 4 bis 8, wobei in dem Kanal (2) Biegungen vorgesehen sind, die einen Biegeradius von größer als 0,5 Meter aufweisen.

10. Entwicklungsstation für Insekten, welche eine Vorrichtung nach einem der Ansprüche 4 bis 9 aufweist.

11. Entwicklungsstation nach Anspruch 10, wobei ein Regal mit Regalböden für eine Anordnung der Insekten vorhanden ist.

12. Automatisierte Aufzucht- und Handhabungsanlage für Insekten mit mindestens einer Vorrichtung nach einem der Ansprüche 4 bis 11, wobei die Insekten in unterschiedlichen Stationen vorgesehen sind und die Stationen hinsichtlich Handhabung und Transport automatisiert betrieben werden.

13. Verwenden einer Einrichtung (4) zum Erzeugen eines Medienstroms für den Transport einer Vielzahl von Insekten, insbesondere von Insektenlarven, von einem Raum (1) zu einem Ort (3) über einen Kanal (2) mittels des Medienstroms, wobei der Medienstrom die Insekten zumindest teilweise aktiv vom Raum (1) zum Ort (3) bewegt.

14. Verwendung eines Trägerhilfsstoffs zum schonenden Transport von Insekten oder Kleinsttieren in einem Medienstrom, wobei insbesondere eine Vorrichtung gemäß einem der Ansprüche 1 bis 9 verwendet wird.
